# EUROPEAN PATENT APPLICATION

(11) **EP 4 450 561 A1**
(43) Date of publication of application: **23.10.2024**
(21) Application number: 22907450.5
(22) Date of filing: 13.12.2022
(51) Int. Cl.: C08L 83/07, C08L 83/05, C09K 3/10

(54) **UV-CURABLE SILICONE COMPOSITION**

(30) Priority: 17.12.2021 JP 2021205097
(71) Applicant: Momentive Performance Materials Inc., Niskayuna, NY 12309 (US); Mochizuki, Kikuo, Tokyo 107-6119 (JP)
(72) Inventor: MOCHIZUKI Kikuo, Tokyo 107-6119 (JP)
(74) Representative: Müller-Boré & Partner Patentanwälte PartG mbB
(86) International application number: PCT/JP2022/045908
(87) International publication number: WO 2023/112926

(57) **Abstract**

A UV-curable silicone composition is provided that has low viscosity, is transparent, and gives a cured product with excellent adhesion. The UV-curable silicone composition includes a polyorganosiloxane (A) containing at least two silicon-bonded alkenyl groups in the molecule; a polyorganohydrogensiloxane (B) having a branched or three-dimensional network structure and containing at least three silicon-bonded hydrogen atoms in the molecule; a polyorganohydrogensiloxane (C) having a linear or cyclic structure and containing two silicon-bonded hydrogen atoms in the molecule; and a UV-active addition reaction curing catalyst (D). The component (B) includes a polyorganohydrogensiloxane (E) having a branched or three-dimensional network structure and containing at least one silicon-bonded alkoxy group SiOR⁰ (R⁰ is a C₁-C₅ alkyl group) and at least three silicon-bonded hydrogen atoms in the molecule.

## Description

### TECHNICAL FIELD

The present invention relates to a UV-curable silicone composition, and more particularly to a UV-curable silicone composition that gives cured products suitably used as sealants, such as electronic component encapsulants, optical component encapsulants, and bonding materials.

### BACKGROUND ART

In recent years, attention has been drawn to flat-panel image display devices, such as liquid crystal, plasma, and organic EL image display devices. A flat-panel image display device usually has a pair of substrates at least one of which is light transmissive, such as glass, and a display region (an image display section) between the substrates that has a matrix arrangement of a large number of pixels as active elements composed of semiconductor layers and phosphor layers, or light-emitting layers. In general, the periphery of the display region (the image display section) and a protective member formed of glass or an optical plastic, such as an acrylic resin, is hermetically sealed with an adhesive.

Such an image display device is produced as a thin image display device in which a UV-curable resin composition is interposed between the protective member and the image display section in order to prevent deterioration in visibility (viewability) stemming from factors, such as reflection of outdoor light or indoor lighting. The UV-curable resin compositions used here are UV-curable acrylic resin compositions or UV-curable silicone resin compositions (Patent Literatures 1 and 2).

LED devices are another type of devices that require hermetical sealing with an adhesive. Organic electronic devices, such as organic light emitting diodes (OLED), are extremely vulnerable to moisture and oxygen, and are disadvantageous in that the luminous efficiency and the lifespan are significantly reduced when the devices are exposed to the atmosphere or when moisture enters from the outside. To address this, a UV-curable silicone resin composition is used as a sealant that can effectively block the inflow of outside oxygen, moisture, and the like and can thereby enhance the lifespan of organic electronic devices (Patent Literature 3).

UV-curable silicone resin compositions are utilized as a composition which can undergo hydrosilylation reaction with a platinum catalyst and can be cured under relatively mild conditions, although sometimes requiring a means for sufficiently curing portions out of reach of UV light (Patent Literatures 4 to 8).

### CITATION LIST

### Patent Literature

Patent Literature 1: JP 2008-282000 A
Patent Literature 2: JP H7-134538 A
Patent Literature 3: JP 2020-504202 A
Patent Literature 4: JP 2019-218495 A
Patent Literature 5: JP 2019-210351 A
Patent Literature 6: JP 2003-213132 A
Patent Literature 7: JP 2014-169412 A
Patent Literature 8: JP 2013-87199 A

### SUMMARY OF INVENTION

### Technical Problem

Recent sealants for optical bonding and LED require adhesion to plastics. Unfortunately, the UV-curable resin compositions of Patent Literatures 1 to 8 are unsatisfactory in this regard. Furthermore, UV-curable resin compositions that give transparent cured products are desired in image display applications from the point of view of viewability.

An object of the present invention is to provide a UV-curable silicone composition that has low viscosity, is transparent, and gives a cured product with excellent adhesion.

### Solution to Problem

As a result of extensive studies directed to solving the problems discussed above, the present inventors have found that a composition including a specific alkenyl group-containing polyorganosiloxane and a specific polyorganohydrogensiloxane in a predetermined blending ratio exhibits low viscosity, is transparent, and gives a cured product with excellent adhesion. The present invention has been completed based on the finding.

The present invention pertains to the following [1] to [14].
[1] A UV-curable silicone composition comprising: a polyorganosiloxane (A) containing at least two alkenyl groups bonded to silicon atoms in the molecule; a polyorganohydrogensiloxane (B) having a branched or three-dimensional network structure and containing at least three hydrogen atoms bonded to silicon atoms in the molecule; a polyorganohydrogensiloxane (C) having a linear or cyclic structure and containing two hydrogen atoms bonded to silicon atoms in the molecule; and a UV-active addition reaction curing catalyst (D),
   the component (B) comprises a polyorganohydrogensiloxane (E) having a branched or three-dimensional network structure and containing at least one alkoxy group SiOR⁰ (wherein R⁰ is a C₁-C₅ alkyl group) bonded to a silicon atom and at least three hydrogen atoms bonded to silicon atoms in the molecule, and the ratio of the number of moles of alkoxy groups bonded to silicon atoms to the number of moles of hydrogen atoms bonded to silicon atoms (SiOR⁰/SiH_{B} ratio) in the whole of the component (B) is greater than 0 and less than 0.3; and
   the ratio of the number of moles of hydrogen atoms bonded to silicon atoms in the component (B) to the number of moles of alkenyl groups bonded to silicon atoms in the component (A) (SiH_{B}/SiVi_{A} ratio) is 0.12 to 1.5.
[2] The UV-curable silicone composition according to [1], wherein the polyorganosiloxane as the component (A) is linear.
[3] The UV-curable silicone composition according to [1] or [2], wherein the component (B) is a polyorganohydrogensiloxane containing an HMe₂SiO_{1/2} unit and a SiO_{4/2} unit; and the component (E) is a polyorganohydrogensiloxane containing an HMe₂SiO_{1/2} unit and a SiO_{4/2} unit and further having a structure represented by SiOR⁰ (wherein R⁰ is a C₁-C₅ alkyl group).
[4] The UV-curable silicone composition according to any one of [1] to [3], wherein the ratio of the number of moles of hydrogen atoms bonded to silicon atoms to the total of the number of moles of hydrogen atoms bonded to silicon atoms and the number of moles of methyl groups bonded to silicon atoms (SiH_{B}/(SiH_{B} + SiMe) ratio) in the whole of the component (B) is 1/3 or more.
[5] The UV-curable silicone composition according to any one of [1] to [4], wherein the polyorganohydrogensiloxane as the component (C) further has at least one alkoxy group bonded to a silicon atom in the molecule.
[6] The UV-curable silicone composition according to any one of [1] to [5], wherein the component (D) is a UV-active platinum catalyst.
[7] The UV-curable silicone composition according to any one of [1] to [6], wherein the component (D) is a platinum catalyst having a cyclic diene compound as a ligand.
[8] The UV-curable silicone composition according to any one of [1] to [7], further comprising a titanate compound.
[9] The UV-curable silicone composition according to any one of [1] to [8], further comprising a UV-inactive platinum catalyst.
[10] The UV-curable silicone composition according to any one of [1] to [9], wherein the contents of Li, Na, and K in the UV-curable silicone composition are each 5 ppm or less.
[11] The UV-curable silicone composition according to any one of [1] to [10], which has a penetration of 40 or less as measured in accordance with ASTM D 1403 after being cured by UV irradiation at an illumination intensity of 100 mW/cm² for 45 seconds followed by 24 hours of standing at 23°C and 50% RH.
[12] A potting material comprising the UV-curable silicone composition described in any one of [1] to [11], the potting material having a viscosity of 50 mPa·s to 1,000 mPa·s at 23°C.
[13] A sealant comprising a cured product of the UV-curable silicone composition described in any one of [1] to [11].
[14] The sealant according to [13], which is an electronic component encapsulant, an optical component encapsulant, or a bonding material.

### Advantageous Effects of Invention

The UV-curable silicone composition provided according to the present invention has low viscosity, is transparent, and gives a cured product with excellent adhesion.

### DESCRIPTION OF EMBODIMENTS

The UV-curable silicone composition comprises a polyorganosiloxane (A) containing at least two alkenyl groups bonded to silicon atoms in the molecule; a polyorganohydrogensiloxane (B) having a branched or three-dimensional network structure and containing at least three hydrogen atoms bonded to silicon atoms in the molecule; a polyorganohydrogensiloxane (C) having a linear or cyclic structure and containing two hydrogen atoms bonded to silicon atoms in the molecule; and a UV-active addition reaction curing catalyst (D). The component (B) comprises a polyorganohydrogensiloxane (E) having a branched or three-dimensional network structure and containing at least one alkoxy group SiOR⁰ (wherein R⁰ is a C₁-C₅ alkyl group) bonded to a silicon atom and at least three hydrogen atoms bonded to silicon atoms in the molecule. The ratio of the number of moles of alkoxy groups bonded to silicon atoms to the number of moles of hydrogen atoms bonded to silicon atoms (SiOR⁰/SiH_{B} ratio) in the whole of the component (B) is greater than 0 and less than 0.3. The ratio of the number of moles of hydrogen atoms bonded to silicon atoms in the component (B) to the number of moles of alkenyl groups bonded to silicon atoms in the component (A) (SiH_{B}/SiVi_{A} ratio) is 0.12 to 1.5. The UV-curable silicone composition can be transparent and low in viscosity and give a cured product with excellent adhesion by virtue of the component (B) comprising the component (E) so as to satisfy the predetermined ratio and also by virtue of the component (A) and the component (B) being blended in the predetermined ratio.

As used herein, the term "organic group" means a group that contains carbon. The valence of an organic group is described as "n-valent" where n is any of a natural number. Thus, for example, a "monovalent organic group" means a group that contains carbon and can be bonded to the other atom or group with one single bond. The valence bond may be present on an element other than carbon. Even when the valence is not explicitly stated, those skilled in the art can understand the appropriate valence from the context.

As used herein, the term "hydrocarbon group" means a group that contains carbon and hydrogen and results from the detachment of at least one hydrogen atom from the molecule. Examples of such hydrocarbon groups include, but are not particularly limited to, C₁-C₂₀ hydrocarbon groups, such as, for example, aliphatic hydrocarbon groups and aromatic hydrocarbon groups, optionally substituted with one or more substituents. The "aliphatic hydrocarbon groups" may be linear, branched, or cyclic, and may be saturated or unsaturated. The hydrocarbon groups may also contain one or more ring structures. The hydrocarbon groups may have, at a terminal or within the molecular chain, one or more heteroatoms or heteroatom-containing structures, such as nitrogen atoms (N), oxygen atoms (O), sulfur atoms (S), silicon atoms (Si), amide bonds, sulfonyl bonds, siloxane bonds, carbonyl groups, and carbonyloxy groups.

As used herein, the substituents on the "hydrocarbon groups" are not particularly limited and may be selected from, for example, halogen atoms; and C₁-C₆ alkyl groups, C₂-C₆ alkenyl groups, C₂-C₆ alkynyl groups, C₃-C₁₀ cycloalkyl groups, C₃-C₁₀ unsaturated cycloalkyl groups, 5-10 membered heterocyclyl groups, 5-10 membered unsaturated heterocyclyl groups, C₆-C₁₀ aryl groups, and 5-10 membered heteroaryl groups, each optionally substituted with one or more halogen atoms.

In the present specification, alkyl groups and phenyl group may be unsubstituted or substituted unless otherwise specified. Substituents on these groups are not particularly limited and may be, for example, one or more groups selected from halogen atoms, C₁-C₆ alkyl groups, C₂-C₆ alkenyl groups, and C₂-C₆ alkynyl groups.

In the present specification, the structure of a siloxane compound is sometimes described using the abbreviations below to indicate the structural units in the siloxane compound. Hereinafter, these structural units are sometimes written as, for example, "M units", "D units", and the like.

M: (CH₃)₃SiO_{1/2}

M^{H}: H(CH₃)₂SiO_{1/2}

M^{Vi}: CH₂=CH(CH₃)₂SiO_{1/2}

D: (CH₃)₂SiO_{2/2}

D^{H}: H(CH₃)SiO_{2/2}

D^{Vi}: CH₂=CH(CH₃)SiO_{2/2}

T: CH₃SiO_{3/2}

Q: SiO_{4/2} (tetrafunctional)

Siloxane compounds are constructed by a combination of the above structural units. The siloxane compounds may include, at least partially, structural units corresponding to the above structural units except that the methyl groups are replaced with other groups, for example, halogens, such as fluorine, and hydrocarbon groups, such as phenyl groups. It is understood that, for example, the notation D^{H}₂₀D₂₀ does not mean that 20 D^{H} units are continuous and followed by a continuation of 20 D units, and the respective units may be arranged in any manner. The T units or the Q units allow the siloxane compounds to take various three-dimensional structures.

As used herein, the term "linear" means a structure that is composed of R₂SiO_{2/2} units and is terminated with an R₃SiO_{1/2} unit at both ends, and the term "branched" indicates a structure containing an RSiO_{3/2} unit and/or a SiO_{4/2} unit as part of a linear chain. The term "cyclic" means a structure that has at least one ring structure usually composed solely of R₂SiO_{2/2} units. The ring structure may partially contain an RSiO₃/₂ unit and/or a SiO_{4/2} unit. The term "three-dimensional network structure" indicates a structure which contains at least 20 unit% or more of SiO_{4/2} units and in which SiO_{4/2} units are densely arranged. Here, R denotes a monovalent organic group.

In the present specification, the viscosity is a value measured using a rotational viscometer with No. 1, No. 2, or No. 3 rotor under conditions of 60 rps and 23°C in accordance with JIS K 6249.

### <Polyorganosiloxanes (A) containing at least two alkenyl groups bonded to silicon atoms in the molecule>

The component (A) is a polyorganosiloxane containing at least two alkenyl groups bonded to silicon atoms in the molecule. The component (A) serves as a base polymer in the UV-curable silicone composition. The alkenyl group may be bonded to a molecular terminal of the molecular main chain, to a side chain in the middle of the molecular chain, or to both. As used herein, the molecular main chain indicates the longest chain relative to other chains in the molecule. The molecular structure of the component (A) is not particularly limited as long as the main backbone is composed of siloxane bonds, and may be linear, branched, cyclic, or three-dimensional network. The siloxane skeleton may be interrupted by a divalent organic group. The components (A) may be used singly, or two or more may be used in combination.

The alkenyl group is not particularly limited as long as the group has a carbon-carbon double bond and can undergo addition reaction. The number of carbon atoms in the alkenyl group is preferably 2 to 20, more preferably 2 to 8, and still more preferably 2 to 6. The alkenyl group may have a branched structure or a ring structure. The carbon-carbon double bond may be located at any position in the hydrocarbon constituting the alkenyl group. From the point of view of reactivity, the carbon-carbon double bond is preferably present at a terminal of the group. For easy synthesis of the polyorganosiloxane, for example, the alkenyl group is preferably a vinyl group.

The component (A) forms a network structure through addition reaction with hydrosilyl groups (Si-H groups) in the components (B) and (C) described later. The molecule of the component (A) typically has at least two alkenyl group-containing siloxane units represented by general formula (1):

R¹ₘR²ₙSiO_{(4-m-n)/2} (1)

(wherein
R¹ is an unsubstituted or substituted, monovalent hydrocarbon group having no aliphatic unsaturated bonds;
R² is an alkenyl group;
m is an integer of 0 to 2; and
n is an integer of 1 to 3, with the proviso that m + n is 1 to 3).

R¹ is an unsubstituted or substituted, monovalent hydrocarbon group having no aliphatic unsaturated bonds. Specific examples of R¹ include alkyl groups, for example, C₁-C₆ alkyl groups (such as, for example, methyl, ethyl, and propyl); cycloalkyl groups, for example, C₃-C₁₀ cycloalkyl groups (such as, for example, cyclohexyl); aryl groups, for example, C₆-C₂₀ aryl groups (such as, for example, phenyl, tolyl, xylyl, naphthyl, and anthracenyl); aralkyl groups, for example, C₇-C₁₃ aralkyl groups (such as, for example, 2-phenylethyl and 2-phenylpropyl); and substituted hydrocarbon groups, for example, halogenated hydrocarbon groups (such as, for example, chloromethyl, chlorophenyl, and 3,3,3-trifluoropropyl). For such reasons as easy synthesis, alkyl groups are preferable. In particular, methyl, ethyl, and propyl are preferable, and methyl is more preferable. In order to control the refractive index, an aryl group may be used in combination. In particular, phenyl is preferable for such reasons as easy synthesis.

In order to impart appropriate fluidity to the composition, the polyorganosiloxane as the component (A) is preferably linear and more preferably comprises a linear polyorganosiloxane having one alkenyl group at each end of the molecular main chain. For example, the linear polyorganosiloxane having one alkenyl group at each end of the molecular main chain may be represented by formula (I): 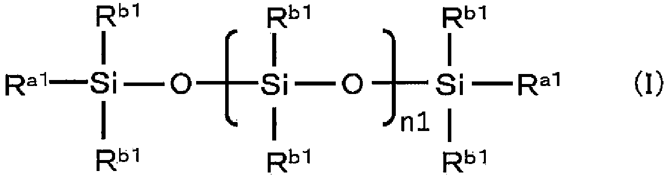 (wherein
R^{a1} independently at each occurrence is a C₂-C₆ alkenyl group,
R^{b1} independently at each occurrence is a C₁-C₆ alkyl group or a C₆-C₂₀ aryl group, and
n1 is such a number that the viscosity at 23°C is 0.1 to 500 Pa-s).

Examples of the C₂-C₆ alkenyl groups include vinyl group, allyl group, 3-butenyl group, and 5-hexenyl group. Examples of the C₁-C₆ alkyl groups include methyl group, ethyl group, propyl group, butyl group, pentyl group, and hexyl group. Examples of the C₆-C₂₀ aryl groups include phenyl group, naphthyl group, and anthracenyl group.

R^{a1} is preferably a vinyl group because the synthesis is easy and because the fluidity of the composition before curing and the heat resistance of a cured product are not impaired. From the point of view of the control of properties, such as refractive index, at least part of the groups R^{b1} may be aryl groups, such as phenyl groups. Polyorganosiloxanes in which all the groups R^{b1} are methyl are preferably used because of high availability. When the refractive index is to be controlled, it is preferable that 1 to 40 mol% of R^{b1} be C₆-C₁₂ aryl groups. To enhance viscosity and cold resistance, it is preferable that 1 to 20 mol% of R^{b1} be C₆-C₁₂ aryl groups.

In 100 mass% of the component (A), the content of the linear polyorganosiloxane having one alkenyl group at each end of the molecular main chain is preferably 30 mass% or more, more preferably 50 mass% or more, and still more preferably 80 mass% or more. The upper limit of the content is 100 mass%.

The component (A) may be a mixture of a linear polyorganosiloxane having one alkenyl group at each end of the molecular main chain, and the other linear, branched, or cyclic, alkenyl group-containing polyorganosiloxane.

The component (A) may be purchased from the market. Alternatively, alkenyl groups may be introduced into a polyorganosiloxane by a known reaction. The component (A) may be a single kind of compound or may be a mixture of two or more kinds of compounds different from one another in, for example, the positions or the types of substituents, or the degree of polymerization. The component (A), which is a polyorganosiloxane, may be a mixture of polyorganosiloxanes having various degrees of polymerization.

From the point of view of the balance between handleability and curability, the amount of the component (A) is preferably 70.0 to 99.8 mass%, more preferably 80.0 to 99.0 mass%, and still more preferably 84.0 to 98.0 mass% of the UV-curable silicone composition taken as 100 mass%.

<Polyorganohydrogensiloxanes (B) having a branched or three-dimensional network structure and containing at least three hydrogen atoms bonded to silicon atoms in the molecule>

The component (B) is a polyorganohydrogensiloxane having a branched or three-dimensional network structure and containing at least three hydrogen atoms bonded to silicon atoms in the molecule. The component (B) serves as a crosslinking agent and undergoes an addition reaction with the alkenyl groups in the component (A) to form a network structure. The hydrogen atoms in the component (B) may be bonded to a silicon atom at a molecular chain terminal, to a silicon atom in the middle of the molecular chain, or to both. The main backbone of the component (B) is composed of siloxane bonds. The siloxane skeleton may be interrupted by a divalent organic group. The components (B) may be used singly, or two or more may be used in combination.

The molecule of the component (B) typically has at least three siloxane units containing a hydrogen atom bonded to a silicon atom, that are represented by general formula (2):

R⁴ₚH_{q}SiO_{(4-p-q)/2} (2)

(wherein
R⁴ is an unsubstituted or substituted, monovalent hydrocarbon group having no aliphatic unsaturated bonds;
p is an integer of 0 to 2; and
q is an integer of 1 to 3, with the proviso that p + q is 1 to 3). In the component (B), the number of the hydrogen atoms bonded to silicon atoms in the molecule is preferably 3 to 100, and more preferably 5 to 50. Examples of R⁴ are similar to those described with respect to R¹ in general formula (1). For example, alkyl groups and aryl groups, in particular, methyl group and substituted or unsubstituted phenyl group are preferable. When properties, such as refractive index, are to be controlled, it is preferable that at least part of the groups R⁴ be substituted or unsubstituted phenyl groups.

Furthermore, the component (B) comprises a polyorganohydrogensiloxane (E) having a branched or three-dimensional network structure and containing at least one alkoxy group SiOR⁰ (wherein R⁰ is a C₁-C₅ alkyl group) bonded to a silicon atom and at least three hydrogen atoms bonded to silicon atoms in the molecule, wherein the ratio of the number of moles of alkoxy groups bonded to silicon atoms to the number of moles of hydrogen atoms bonded to silicon atoms (SiOR⁰/SiH_{B} ratio) in the whole of the component (B) is greater than 0 and less than 0.3. The present inventors have found that when the component (B) comprises the component (E) containing an alkoxy group bonded to a silicon atom in the predetermined proportion, the UV-curable silicone composition can give cured products with enhanced adhesion and mechanical properties, such as hardness, while remaining low in viscosity and transparent. It is probable that the SiOR⁰ groups in the component (E) form crosslinks with reactive groups in members, such as electronic components or optical components, and thereby contribute to the enhancement in adhesion with respect to these members.

If the SiOR⁰/SiH_{B} ratio is 0, cured products exhibit low adhesion. If the SiOR⁰/SiH_{B} ratio is 0.3 or more, the composition and cured products thereof are poor in transparency. The SiOR⁰/SiH_{B} ratio is preferably 0.01 to less than 0.30, more preferably 0.01 to 0.15, still more preferably 0.01 to 0.10, and particularly preferably 0.03 to 0.10.

### [Polyorganohydrogensiloxanes (E) having a branched or three-dimensional network structure and containing at least one alkoxy group bonded to a silicon atom and at least three hydrogen atoms bonded to silicon atoms in the molecule]

The molecule of the component (E) has at least three siloxane units containing a hydrogen atom bonded to a silicon atom, that are represented by general formula (2), and also has at least one alkoxy group SiOR⁰ (wherein R⁰ is a C₁-C₅ alkyl group) bonded to a silicon atom. In the component (E), the number of the hydrogen atoms bonded to silicon atoms in the molecule is preferably 3 to 100, and more preferably 5 to 50. From the point of view of reactivity, R⁰ is preferably a methyl group, an ethyl group, or a propyl group, and particularly preferably a methyl group or an ethyl group. For easy synthesis, the hydrogen atom bonded to a silicon atom and the alkoxy group bonded to a silicon atom are preferably bonded to separate silicon atoms.

### [Preferred embodiments of the component (B) and the component (E)]

From the points of view of adhesion, transparency, and mechanical properties of cured products, the component (B) is preferably a polyorganohydrogensiloxane containing an HMe₂SiO_{1/2} unit and a SiO_{4/2} unit; and the component (E) is preferably a polyorganohydrogensiloxane containing an HMe₂SiO_{1/2} unit and a SiO_{4/2} unit and further having a structure represented by SiOR⁰ (wherein R⁰ is a C₁-C₅ alkyl group). In the formulas, Me denotes a methyl group. The component (B) described above provides a network structure in a cured product, thereby allowing for hardness control, and also contributes to enhancing the adhesion. R⁰ is preferably a methyl group, an ethyl group, or a propyl group, and particularly preferably a methyl group or an ethyl group.

Based on 100 mass% of the whole of the component (B) including the component (E), the content of the component (B) having no SiOR⁰ structures is preferably 50 mass% or more, more preferably 70 mass% or more, and still more preferably 90 mass% or more. The content of the component (E) having a SiOR⁰ structure is preferably 50 mass% or less, more preferably 30 mass% or less, and still more preferably 10 mass% or less based on 100 mass% of the whole of the component (B) including the component (E).

In order to obtain a cured product having appropriate hardness and mechanical strength, the ratio of the number of moles of hydrogen atoms bonded to silicon atoms to the total of the number of moles of hydrogen atoms bonded to silicon atoms and the number of moles of methyl groups bonded to silicon atoms (SiH_{B}/(SiH_{B} + SiMe) ratio) in the whole of the component (B) is preferably 1/3 or more. The SiH_{B}/(SiH_{B} + SiMe) ratio is more preferably 1/3 to 5/11, and particularly preferably 1/3 to 317.

The viscosity of the component (B) at 23°C is preferably 1 to 100 mPa·s, and more preferably 1 to 50 mPa·s.

The component (B) may be purchased from the market. Alternatively, the component (B) may be synthesized by a known reaction. The component (B) may be a single kind of compound or may be a mixture of two or more kinds of compounds different from one another in, for example, the positions or the types of substituents, or the degree of polymerization. The component (B), which is a polyorganohydrogensiloxane, may be a mixture of polyorganohydrogensiloxanes having various degrees of polymerization.

From the points of view of adhesion and mechanical properties of cured products, the ratio of the number of moles of hydrogen atoms bonded to silicon atoms in the component (B) to the number of moles of alkenyl groups bonded to silicon atoms in the component (A) (SiH_{B}/SiVi_{A} ratio) is 0.12 to 1.5. The SiH_{B}/SiVi_{A} ratio is preferably 0.12 to 1.3, and particularly preferably 0.12 to 1.0.

### <Polyorganohydrogensiloxanes (C) having a linear or cyclic structure and containing two hydrogen atoms bonded to silicon atoms in the molecule>

The component (C) is a polyorganohydrogensiloxane having a linear or cyclic structure and containing two hydrogen atoms bonded to silicon atoms in the molecule. The component (C) is free from alkenyl groups. The component (C) serves to extend the chain length of the component (A) by undergoing addition reaction with the alkenyl groups in the component (A). The hydrogen atoms in the component (C) may be bonded to a silicon atom at a molecular chain terminal, to a silicon atom in the middle of the molecular chain, or to both. The main backbone of the component (C) is composed of siloxane bonds. The siloxane skeleton may be interrupted by a divalent organic group. The components (C) may be used singly, or two or more may be used in combination.

The molecule of the component (C) typically contains two siloxane units containing a hydrogen atom bonded to a silicon atom, that are represented by general formula (2). Examples of R⁴ in general formula (2) are similar to those described with respect to R¹ in general formula (1). R⁴ is preferably an alkyl group or an aryl group, more preferably an alkyl group, and particularly preferably a methyl group.

From the point of view of the adhesion of cured products, it is preferable that the polyorganohydrogensiloxane as the component (C) further has at least one alkoxy group bonded to a silicon atom in the molecule. That is, the component (C) preferably comprises a polyorganohydrogensiloxane (C2) having a linear or cyclic structure and containing two hydrogen atoms bonded to silicon atoms and at least one alkoxy group bonded to a silicon atom in the molecule. Examples of the alkoxy groups include Ci-C₄ alkoxy groups and 2-methoxyethoxy group.

The component (C2) may be exemplified by a compound in which a group represented by general formula (3) below is bonded to a silicon atom.

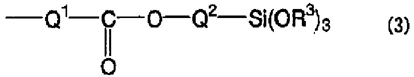

In the formula, Q¹ denotes a linear or branched alkylene group that forms a C₂ or higher carbon chain between the silicon atom and the ester bond; Q² denotes a linear or branched alkylene group that forms a C₃ or higher carbon chain between the oxygen atom and the silicon atom in the group; and R³ denotes a C₁-C₄ alkyl group or a 2-methoxyethyl group.

The component (C2) undergoes an addition reaction with the component (A) during curing of the composition and is introduced into the siloxane structure crosslinked by the addition reaction of the components (A) and (B), and the group represented by general formula (3) exhibits adhesion and contributes to the adhesion of the composition at room temperature. The components (C2) may be used singly, or two or more may be used in combination.

Because of easy synthesis and easy handling, Q¹ in general formula (3) is preferably an ethylene group or a 2-methylethylene group. Because of easy synthesis and easy handling, Q² is preferably a trimethylene group. R³ is preferably a methyl group or an ethyl group, and particularly preferably a methyl group, because the structure provides good adhesion and the alcohol resulting from the hydrolysis is easily volatilized.

For easy synthesis of the component (C2), the hydrogen atom bonded to a silicon atom and the group represented by general formula (3) are preferably bonded to separate silicon atoms.

Examples of the components (C2) include reaction products of a linear or cyclic polyorganohydrogensiloxane with a silane compound having an acrylic group or a methacrylic group. Such compounds are advantageous in that the synthetic route has been established and in that the number of Si-H bonds and the number of hydrolyzable groups per molecule can be easily controlled, and therefore properties of the composition as a whole can be uniformly controlled easily. More specific examples of the components (C2) include the following compounds:

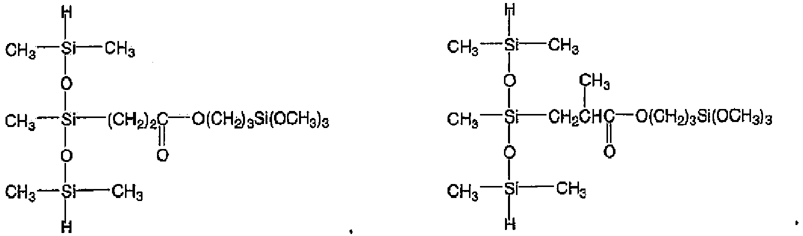

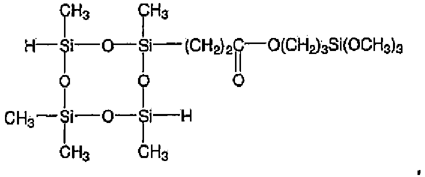

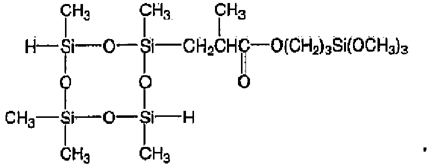

From the point of view of the adhesion of cured products, the ratio of the total number of moles of hydrogen atoms bonded to silicon atoms in the components (B) and (C) to the number of moles of alkenyl groups bonded to silicon atoms in the component (A) ((SiH_{B} + SiH_{C})/SiVi_{A} ratio) is preferably 0.20 to 2.0, and more preferably 0.80 to 1.5. Furthermore, the ratio of the number of moles of hydrogen atoms bonded to silicon atoms in the component (C) to the total number of moles of hydrogen atoms bonded to silicon atoms in the components (B) and (C) (SiH_{C}/(SiH_{B} + SiH_{C}) ratio) is preferably 0.10 to 0.90.

Furthermore, from the point of view of the adhesion of cured products, the ratio of the number of moles of hydrogen atoms bonded to silicon atoms in the component (C2) to the number of moles of alkenyl groups bonded to silicon atoms in the component (A) (SiH_{C2}/SiVi_{A} ratio) is preferably 0.05 to 0.30, and more preferably 0.07 to 0.20.

### <UV-active addition reaction curing catalysts (D)>

The component (D) is a catalyst that is activated by UV light and promotes the addition reaction between the alkenyl groups in the component (A) and the hydrosilyl groups (Si-H groups) in the components (B) and (C). In order to ensure good catalytic activity, a platinum catalyst is suitably used. In particular, the component (D) is preferably a platinum catalyst having a cyclic diene compound as a ligand. The components (D) may be used singly, or two or more may be used in combination.

Examples of the platinum catalysts having a cyclic diene compound as a ligand include (1,5-cyclooctadienyl) diphenyl platinum complex, (1,5-cyclooctadienyl) dipropyl platinum complex, (2,5-norboradiene) dimethyl platinum complex, (2,5-norboradiene) diphenyl platinum complex, (cyclopentadienyl) dimethyl platinum complex, (methylcyclopentadienyl) diethyl platinum complex, (trimethylsilylcyclopentadienyl) diphenyl platinum complex, (methylcycloocta-1,5-dienyl) diethyl platinum complex, (cyclopentadienyl) trimethyl platinum complex, (cyclopentadienyl) ethyldimethyl platinum complex, (cyclopentadienyl) acetyldimethyl platinum complex, (methylcyclopentadienyl) trimethyl platinum complex, (methylcyclopentadienyl) trihexyl platinum complex, (trimethylsilylcyclopentadienyl) trimethyl platinum complex, (dimethylphenylsilylcyclopentadienyl) triphenyl platinum complex, and (cyclopentadienyl) dimethyltrimethylsilylmethyl platinum complex.

The component (D) is preferably added in such an amount that the mass of platinum metal relative to the total mass of the components (A) to (C) will be 0.1 to 500 ppm, more preferably 1 to 100 ppm, still more preferably 3 to 70 ppm, and particularly preferably 5 to 50 ppm. If the amount of the component (D) is less than 0.1 ppm, the addition reaction induced by UV irradiation may be slow or may not accomplish curing. If the amount is more than 500 ppm, the UV-curable silicone composition tends to be deteriorated in storage stability and yellowing occurs easily in cured products, leading to high costs.

### <Additional components>

The UV-curable silicone composition may contain additional components as long as the purpose and the effects of the composition are not impaired. Exemplary additional components that may be appropriately added include titanate compounds, flame retardants, adhesion-imparting agents, heat resistance-imparting agents, diluents, thixotropic agents, such as fumed silica, inorganic or organic pigments, addition reaction curing catalyst inhibitors, and resins other than polyorganosiloxanes. For example, the UV-curable silicone composition may contain polyorganosiloxanes other than the component (A), for example, a polyorganosiloxane containing one or less alkenyl group bonded to a silicon atom in the molecule; polyorganohydrogensiloxanes other than the components (B) and (C), for example, a polyorganohydrogensiloxane having one hydrogen atom bonded to a silicon atom in the molecule; and addition reaction curing catalysts other than the component (D), for example, a thermally active UV-inactive platinum catalyst. The additional components of each category may be used singly, or two or more may be used in combination.

### [Titanate compounds]

The UV-curable silicone composition preferably further includes a titanate compound. The adhesion of the UV-curable silicone composition may be enhanced by adding a titanate compound. Examples of the titanate compounds include titanium alkoxides, such as tetraethoxytitanium, tetra-n-propoxytitanium, tetraisopropoxytitanium, tetra-n-butoxytitanium, tetraisobutoxytitanium, and titanium tetraisopropenyl oxide. Among these, tetra-n-butoxytitanium is preferable.

From the point of view of adhesion, the amount in which the titanate compound is added with respect to 100 parts by mass of the component (A) is preferably less than 1 part by mass, and more preferably 0.01 to 0.1 part by mass.

### [UV-inactive platinum catalysts]

The UV-curable silicone composition preferably further includes a UV-inactive platinum catalyst. A UV-inactive platinum catalyst is a catalyst that is activated by being heated and promotes the addition reaction between the alkenyl groups in the component (A) and the hydrosilyl groups (Si-H groups) in the components (B) and (C). The addition of a UV-inactive platinum catalyst offers enhanced curability of portions of the UV-curable silicone composition that are out of reach of UV light.

Examples of the UV-inactive platinum catalysts include platinum black, platinic chloride, chloroplatinic acid, reaction products of chloroplatinic acid with a monohydric alcohol, chloroplatinic acid with an olefin, platinum-vinylsiloxane complexes, such as platinum-1,3-divinyl-1,1,3,3-tetramethyldisiloxane complex, platinum-vinylmethylcyclosiloxane complexes, such as platinum-2,4,6,8-tetravinyl-2,4,6,8-tetramethylcyclotetrasiloxane complex, and platinum bisacetoacetate. In particular, platinum-vinylsiloxane complexes are preferable.

Excessive addition of platinum causes yellowing of cured products. Thus, the UV-inactive platinum catalyst is preferably added in an amount of 20 ppm or less in terms of the mass of platinum metal with respect to the total mass of the components (A) to (C), and the amount is more preferably 0.1 to 10 ppm, still more preferably 0.3 to 5.0 ppm, and particularly preferably 0.50 to 3.0 ppm.

When the UV-curable silicone composition includes the UV-inactive platinum catalyst, a longer pot life can be obtained by adding a reaction inhibitor to suppress the activity of the catalyst. Known reaction inhibitors for platinum group metals may be used, with examples including acetylene alcohols, such as 2-methyl-3-butyn-2-ol, 1-ethynyl-1-cyclohexanol, and 1-ethynyl-2-cyclohexanol, and vinyl group-containing low-molecular cyclic siloxanes, such as vinyl tetramers.

In order to enhance the heat resistance and insulating properties of cured products, the contents of Li, Na, and K in the UV-curable silicone composition are preferably each 5 ppm or less, and more preferably each 3 ppm or less. The contents of Li, Na, and K may be controlled by the use of the components (A) to (D) and optional additional components purified and having low contents of these elements.

### <Methods for producing the UV-curable silicone compositions>

The UV-curable silicone composition may be obtained by mixing the components (A) to (D) and, if necessary, additional components in a mixer, such as a planetary mixer. At the time of mixing, where needed, the components may be mixed while being heated in the range of 50 to 150°C. When the UV-curable silicone composition contains a powder, a kneading operation is preferably performed under high shear force for uniform finish. For example, the kneading device may be a three-roll mill, a colloid mill, or a sand grinder, with a three-roll mill being preferable.

From the point of view of spreadability at the time of application, the viscosity of the UV-curable silicone composition at 23°C is preferably 100,000 mPa s or less, and more preferably 50 to 50,000 mPa·s. When the UV-curable silicone composition is used as a potting material, the viscosity of the composition at 23°C is preferably 50 mPa·s to 1,000 mPa·s from the point of view of fluidity of the composition. The UV-curable silicone composition is preferably stored at or below room temperature and under light shielding.

### <Methods for curing the UV-curable silicone compositions>

The UV-curable silicone composition may be cured by UV irradiation. The irradiation dose is preferably 100 to 10,000 mJ/cm², more preferably 300 to 6,000 ml/cm², and still more preferably 500 to 5,000 mJ/cm². Incidentally, the irradiation dose is a value measured with respect to UVA. Here, UVA refers to ultraviolet light in the range of 315 to 400 nm. The composition exhibits good curability when irradiated with ultraviolet light having an ultraviolet wavelength, for example, a wavelength in the range of 250 to 450 nm. Examples of the light sources that emit ultraviolet light having such wavelengths include high-pressure mercury lamp (UV-7000) and metal halide lamp (UVL-4001M3-N1) manufactured by Ushio Inc., metal halide lamp (JM-MTL 2KW) manufactured by JM tech, Korea, UV irradiation lamp (OSBL360) manufactured by Mitsubishi Electric Corporation, UV irradiation machine (UD-20-2) manufactured by GS Yuasa Corporation, fluorescent lamp (FL-20BLB) manufactured by TOSHIBA CORPORATION, H Bulb, H plus Bulb, V Bulb, D Bulb, Q Bulb, and M Bulb manufactured by Heraeus, and LED lamp (HLDL-155UV) manufactured by CCS Inc.

The curing time of the composition depends on the UV irradiation dose but is generally 30 minutes or less, and preferably 10 minutes or less. The progress of the curing of the composition may be judged visually or may be quantitatively estimated by, for example, measuring the time for the storage elastic modulus G' and the loss elastic modulus G" to become equal or the time for the storage elastic modulus G' to reach a predetermined value. Short curing time and excellent handleability can be advantageously obtained when, for example, the storage elastic modulus G' reaches 100 Pa in 30 minutes or less, preferably 10 minutes or less, at 23°C after UV irradiation.

### <Preferred embodiments of the UV-curable silicone compositions>

In order to eliminate or reduce the stickiness on the surface of cured products, the UV-curable silicone composition preferably has a penetration of 40 or less, and more preferably 35 or less, as measured in accordance with ASTM D 1403 after being cured by UV irradiation at an illumination intensity of 100 mW/cm² for 45 seconds followed by 24 hours of standing at 23°C and 50% RH.

In order to prevent the occurrence of cracks and to obtain cured products with appropriate hardness, the UV-curable silicone composition preferably has a Shore 00 hardness of 0 to 90, and more preferably 0 to 75, as measured in accordance with ASTM D 2240 after being cured by UV irradiation at an illumination intensity of 100 mW/cm² for 45 seconds followed by 24 hours of standing at 23°C and 50% RH.

### <Use applications of the UV-curable silicone compositions>

The UV-curable silicone composition gives cured products that are transparent and excellent in adhesion, and therefore the composition may be suitably used as a potting material. A potting material is a liquid composition that is poured into a caseshaped device and is cured to protect parts in the device. In an aspect, the present invention provides a potting material comprising the UV-curable silicone composition and having a viscosity of 50 mPa·s to 1,000 mPa·s at 23°C. The viscosity of the potting material is preferably 70 to 800 mPa-s, and more preferably 100 to 500 mPa·s.

In another aspect of the present invention, a cured product of the UV-curable silicone composition may be suitably used as a sealant. An article that uses a cured product of the UV-curable silicone composition as a sealant is excellent in water resistance and durability at the adhesive face and the sealing area. Thus, the cured product may be suitably used as an electronic component encapsulant, an optical component encapsulant, or a bonding material. Furthermore, for example, the UV-curable silicone composition may be used as an adhesive for bonding in image display devices, such as liquid crystal, plasma, and organic EL image display devices, or as a sealant for sealing LED devices or OLED devices.

### EXAMPLES

Hereinbelow, the present invention will be described in greater detail by presenting Examples and Comparative Examples. However, the present invention is not limited by these Examples. References to amounts indicate parts by mass or mass% unless otherwise specified.

### <Components used>

The components used are described below. Here, the symbols mean:

M: (CH₃)₃SiO_{1/2}

M^{H}: H(CH₃)₂SiO_{1/2}

M^{Vi}: CH₂=CH(CH₃)₂SiO_{1/2}

D: (CH₃)₂SiO_{2/2}

D^{H}: H(CH₃)SiO_{2/2}

D^{Vi}: CH₂=CH(CH₃)SiO_{2/2}

Q: SiO_{4/2} (tetrafunctional)

### Components (A): Polyorganosiloxanes containing at least two alkenyl groups bonded to silicon atoms in the molecule

The following linear polymethylvinylsiloxanes diterminated with M^{Vi} unit and having D units as intermediate units were used.
(A1) M^{Vi}Dₘ₁M^{Vi} (viscosity at 23°C: 400 mPa-s)
(A2) M^{Vi}Dₘ₂M^{Vi} (viscosity at 23°C: 250 mPa-s)
(A3) M^{Vi}Dₘ₃M^{Vi} (viscosity at 23°C: 100 mPa·s)

### Components (B): Polyorganohydrogensiloxanes having a branched or three-dimensional network structure and containing at least three hydrogen atoms bonded to silicon atoms in the molecule (including component (E), SiOR⁰/SiH_{B} ratio: greater than 0 and less than 0.3)

(B1) Crosslinkable polymethylhydrogensiloxane having the average unit formula M^{H}₈Q₄ (SiH_{B} content: 10.30 mmol/g, SiOR⁰/SiH_{B} ratio: 0.03, R⁰: methyl group, SiH_{B}/(SiH_{B} + SiMe) ratio: 1/3)
(B2) Crosslinkable polymethylhydrogensiloxane having the average unit formula M^{H}₈Q₄ (SiH_{B} content: 9.41 mmol/g, SiOR⁰/SiH_{B} ratio: 0.13, R⁰: methyl group, SiH_{B}/(SiH_{B} + SiMe) ratio: 1/3)
(B3) Crosslinkable polymethylhydrogensiloxane having the average unit formula M^{H}₈Q₄ (SiH_{B} content: 9.21 mmol/g, SiOR⁰/SiH_{B} ratio: 0.29, R⁰: methyl group, SiH_{B}/(SiH_{B} + SiMe) ratio: 1/3)

### Components (B'): Polyorganohydrogensiloxanes containing at least three hydrogen atoms bonded to silicon atoms in the molecule (SiOR⁰/SiH_{B} ratio: 0 or 0.3 or more)

(B'1) Crosslinkable polymethylhydrogensiloxane having the average unit formula M^{H}₈Q₄ (SiH_{B} content: 9.20 mmol/g, SiOR⁰/SiH_{B} ratio: 0.34, R⁰: methyl group, SiH_{B}/(SiH_{B} + SiMe) ratio: 1/3)
(B'2) Crosslinkable polymethylhydrogensiloxane having the average unit formula MD₁₅D^{H}₂₄M (SiH_{B} content: 8.90 mmol/g, including no component (E), SiOR⁰/SiH_{B} ratio: 0, SiH_{B}/(SiH_{B} + SiMe) ratio: 2/7)

### Components (C): Polyorganohydrogensiloxanes having a linear or cyclic structure and containing two hydrogen atoms bonded to silicon atoms in the molecule

(C1) Linear polymethylhydrogensiloxane having the average unit formula M^{H}D₂₀M^{H} (SiHc content: 1.24 mmol/g, containing no alkoxy groups bonded to silicon atoms)
(C2) Cyclic polymethylhydrogensiloxane represented by the structural formula below (SiHc content: 3.98 mmol/g, containing alkoxy groups bonded to silicon atoms)

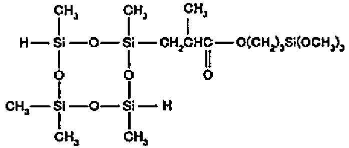

### Component (D): UV-active addition reaction curing catalyst

### (Methylcyclopentadienyl) trimethyl platinum complex (manufactured by Strem Chemicals, Inc. (Germany), amount of platinum: 61.1 mass%)

### Component (F): Titanate compound

### Tetra-n-butoxytitanium (TBT, manufactured by NIPPON SODA CO., LTD., B-1)

### Component (G): UV-inactive platinum catalyst

### 1,3-Divinyl-1,1,3,3-tetramethyldisiloxane coordinated platinum solution (manufactured by Umicore Japan, Pt-No. 8, amount of platinum: 5.0 mass%)

### Example 1

The component (D) was handled in a yellow room to prevent catalyst activation by UV light. 1.0 mass% respective solutions of the component (D) and the component (G) were prepared using the component (A1). 37.209 parts by mass of the component (A1), 51.8 parts by mass of the component (A2), and 10. 1 parts by mass of the component (A3) were mixed to give a mixture of the components (A), to which 0.30 parts by mass of the component (B1), 14.0 parts by mass of the component (C1), 0.50 parts by mass of the component (C2), and 0.030 parts by mass of the component (F) were sequentially admixed. After checking the appearance of the mixed solution thus obtained, the dilute solutions of the components (D) and (G) were added thereto in a yellow room in such amounts that the amounts of the components added would be 0.006 parts by mass and 0.003 parts by mass, respectively. The mixture was mixed to give a UV-curable silicone composition of Example 1.

### Examples 2 to 7 and Comparative Examples 1 to 5

UV-curable silicone compositions of Examples 2 to 7 and Comparative Examples 1 to 5 were obtained in the same manner as in Example 1, except that the components (A) to (G) in Example 1 and the amounts thereof were changed as described in Table 1.

### [Table 1]

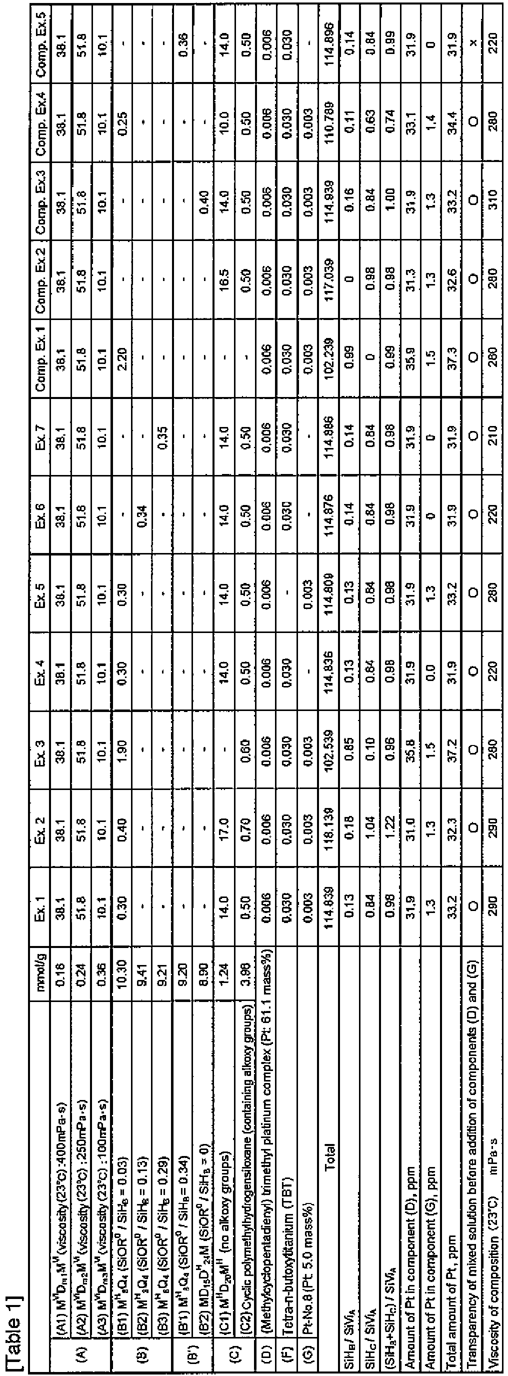

### <Measurement methods>

### [Transparency of the mixed solution before addition of the components (D) and (G)]

During the preparation of the compositions of Examples 1 to 7 and Comparative Examples 1 to 5, the transparency of the mixed solution before the addition of the dilute solutions of the components (D) and (G) was visually evaluated according to the following criteria. The results are described in Table 1.
∘: The mixed solution is transparent.
×: The mixed solution is hazy or turbid.

### [Viscosity]

The compositions of Examples 1 to 7 and Comparative Examples 1 to 5 were each analyzed using a rotational viscometer (VISMETRON VDA2, manufactured by Shibaura Systems) equipped with a No. 2 rotor at 60 rpm and 23°C in accordance with JIS K 6249 to measure the Viscosity. The results are described in Table 1.

### [Contents of Li, Na, and K]

The compositions of Examples 1 to 7 and Comparative Examples 1 to 5 were each analyzed by atomic absorption spectrometry to measure the contents of Li, Na, and K. In all the compositions, the contents of Li, Na, and K were each less than 2 ppm.

### Fabrication of cured products

The following evaluation was not performed in Comparative Example 5 because the mixed solution before the addition of the dilute solutions of the components (D) and (G) was poor in transparency and it was expected that the composition obtained therefrom and cured products would be poorly transparent too.

Samples (cured products) for the evaluation of transparency, Shore 00 hardness, and penetration were prepared from the UV-curable silicone compositions of Examples 1 to 7 and Comparative Examples 1 to 4 that had performed well (rating: o) in the evaluation of mixed solution transparency. Each of the compositions was poured into a mold or a container described later, cured by applying UV light with an illumination intensity of 100 mW/cm² for 45 seconds using HLDL-155UV manufactured by CCS Inc., and further stored at 23°C and 50% RH for 24 hours. The cured products thus obtained were tested to evaluate the transparency, the Shore 00 hardness, and the penetration.
Transparency: Mold of 100 mm in length × 100 mm in width × 2 mm in depth
Shore 00 hardness: Mold of 60 mm in length × 30 mm in width × 6 mm in depth
Penetration: Container of 40 mm in diameter (amount of composition: 30 g)

### [Transparency]

The cured products of the UV-curable silicone compositions of Examples 1 to 7 and Comparative Examples 1 to 4 were observed to evaluate the transparency according to the following criteria. The results are described in Table 2.
∘: The cured product is transparent.
×: The cured product is hazy and cloudy.

### [Shore 00 hardness]

The Shore 00 hardness of the cured products was evaluated in accordance with ASTM D 2240. The judgements were that the Shore 00 hardness was practically acceptable when the value was 0 to 90, and was excellent when the value was 0 to 75. The results are described in Table 2.

### [Penetration]

The cured products were analyzed in accordance with ASTM D 1403 to evaluate the penetration. The judgements were that the surface was less sticky and was of good quality when the penetration was 40 or less, and the surface quality was superior when the penetration was 0 to 35. The penetrations of the cured products of Example 2 and Comparative Example 4 were measured to be 33 and 93, respectively.

### [Shear bond strength]

### [Cohesive failure ratio]

Two glass plates of 76 mm in length × 26 mm in width × 1 mm in thickness were provided. The UV-curable silicone composition was used as an adhesive, and the two glass plates were bonded to each other as described below to give a shear test specimen. The UV-curable silicone composition was applied to a side of one of the glass plates with use of a spacer so that the coated region would extend from an end of the width direction to a length of 10 mm and would be 10 mm in length × 26 mm in width × 100 µm in thickness. The other of the glass plates was superposed on the applied composition in such a manner that the bonded region would extend from an end of the width direction of the plate to a length of 10 mm over a width of 26 mm and that the uncoated regions of the glass plates would be directed opposite to each other in the longitudinal direction. The superposed portions were fixed with a jig. Next, the unit was irradiated with 365 nm wavelength LED light with an illumination intensity of 100 mW/cm² for 45 seconds using HLDL-155UV manufactured by CCS Inc. and was allowed to stand at 23°C for 24 hours. The glass plates were thus bonded to each other to give a shear test specimen. The glass plates were each fixed to a grip of a tensile tester (AG-IS) manufactured by SHIMADZU CORPORATION so that a shear force would be applied in the length direction (10 mm) of the cured product. A tensile test was then performed at a tensile rate of 10 mm/min to measure the shear bond strength (MPa) and the cohesive failure ratio (%). The adhesion was evaluated as excellent when the shear bond strength was 0.5 MPa or more. The cohesive failure ratio (%) was calculated by the formula: (100 × S)I(10 × 26) wherein S is the area mm² of the cohesively failed portion of the cured product on the glass plate. The adhesion was evaluated as excellent when the cohesive failure ratio was 80% or more. The results are described in Table 2.

### [Table 2]

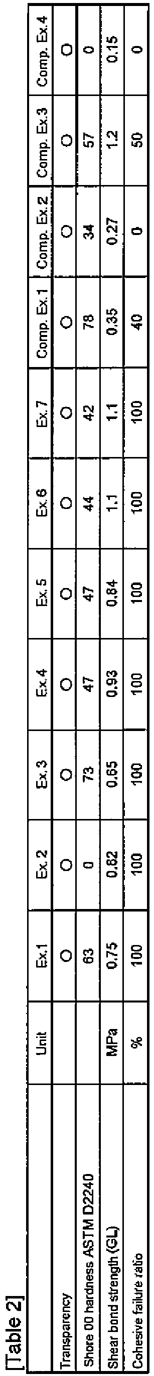

The UV-curable silicone compositions of Examples 1 to 7 included a polyorganosiloxane (A) containing at least two alkenyl groups bonded to silicon atoms in the molecule; a polyorganohydrogensiloxane (B) having a branched or three-dimensional network structure and containing at least three hydrogen atoms bonded to silicon atoms in the molecule; a polyorganohydrogensiloxane (C) having a linear or cyclic structure and containing two hydrogen atoms bonded to silicon atoms in the molecule; and a UV-active addition reaction curing catalyst (D), and were such that the component (B) included a polyorganohydrogensiloxane (E) having a branched or three-dimensional network structure and containing at least one alkoxy group SiOR⁰ (wherein R⁰ is a C₁-C₅ alkyl group) bonded to a silicon atom and at least three hydrogen atoms bonded to silicon atoms in the molecule, and the ratio of the number of moles of alkoxy groups bonded to silicon atoms to the number of moles of hydrogen atoms bonded to silicon atoms (SiOR⁰/SiH_{B} ratio) in the whole of the component (B) was greater than 0 and less than 0.3; and the ratio of the number of moles of hydrogen atoms bonded to silicon atoms in the component (B) to the number of moles of alkenyl groups bonded to silicon atoms in the component (A) (SiH_{B}/SiVi_{A} ratio) was 0.12 to 1.5. As described in Table 2, these compositions gave cured products having excellent adhesion and transparency.

The composition of Comparative Example 1, which did not contain the component (C), gave cured products that were inferior in shear bond strength and cohesive failure ratio. Comparative Example 2, in which the component (B) was not added, resulted in markedly low shear bond strength and a significantly low cohesive failure ratio. In Comparative Example 3, the component (B) was replaced with a polyorganohydrogensiloxane that contained at least three hydrogen atoms bonded to silicon atoms in the molecule but had SiOR⁰/SiH_{B} = 0; the cured product of the composition was poor in cohesive failure ratio. In Comparative Example 4, the components (A) to (D) were added but the SiH_{B}/SiVi_{A} ratio was 0.11; the cured products of the composition were significantly soft and had markedly low shear bond strength and a significantly low cohesive failure ratio. In Comparative Example 5, the component (B) was replaced with a polyorganohydrogensiloxane that contained at least three hydrogen atoms bonded to silicon atoms in the molecule but had SiOR⁰/SiH_{B} = 0.34; the composition became hazy during its preparation and was poorly transparent, failing to qualify for use as electronic component encapsulants, optical component encapsulants, and the like.

### Industrial Applicability

Cured products of the UV-curable silicone compositions are useful as an electronic component encapsulant, an optical component encapsulant, or a bonding material.

## Claims

1. A UV-curable silicone composition comprising:
a polyorganosiloxane (A) containing at least two alkenyl groups bonded to silicon atoms in the molecule;
a polyorganohydrogensiloxane (B) having a branched or three-dimensional network structure and containing at least three hydrogen atoms bonded to silicon atoms in the molecule;
a polyorganohydrogensiloxane (C) having a linear or cyclic structure and containing two hydrogen atoms bonded to silicon atoms in the molecule; and
a UV-active addition reaction curing catalyst (D),
the component (B) comprises a polyorganohydrogensiloxane (E) having a branched or three-dimensional network structure and containing at least one alkoxy group SiOR⁰ (wherein R⁰ is a C₁-C₅ alkyl group) bonded to a silicon atom and at least three hydrogen atoms bonded to silicon atoms in the molecule, and the ratio of the number of moles of alkoxy groups bonded to silicon atoms to the number of moles of hydrogen atoms bonded to silicon atoms (SiOR⁰/SiH_{B} ratio) in the whole of the component (B) is greater than 0 and less than 0.3; and
the ratio of the number of moles of hydrogen atoms bonded to silicon atoms in the component (B) to the number of moles of alkenyl groups bonded to silicon atoms in the component (A) (SiH_{B}/SiVi_{A} ratio) is 0.12 to 1.5.

2. The UV-curable silicone composition according to claim 1, wherein the polyorganosiloxane as the component (A) is linear.

3. The UV-curable silicone composition according to claim 1 or 2, wherein the component (B) is a polyorganohydrogensiloxane containing an HMe₂SiO_{1/2} unit and a SiO_{4/2} unit; and the component (E) is a polyorganohydrogensiloxane containing an HMe₂SiO_{1/2} unit and a SiO_{4/2} unit and further having a structure represented by SiOR⁰ (wherein R⁰ is a C₁-C₅ alkyl group).

4. The UV-curable silicone composition according to claim 1 or 2, wherein the ratio of the number of moles of hydrogen atoms bonded to silicon atoms to the total of the number of moles of hydrogen atoms bonded to silicon atoms and the number of moles of methyl groups bonded to silicon atoms (SiH_{B}/(SiH_{B} + SiMe) ratio) in the whole of the component (B) is 1/3 or more.

5. The UV-curable silicone composition according to claim 1 or 2, wherein the polyorganohydrogensiloxane as the component (C) further has at least one alkoxy group bonded to a silicon atom in the molecule.

6. The UV-curable silicone composition according to claim 1 or 2, wherein the component (D) is a UV-active platinum catalyst.

7. The UV-curable silicone composition according to claim 1 or 2, wherein the component (D) is a platinum catalyst having a cyclic diene compound as a ligand.

8. The UV-curable silicone composition according to claim 1 or 2, further comprising a titanate compound.

9. The UV-curable silicone composition according to claim 1 or 2, further comprising a UV-inactive platinum catalyst.

10. The UV-curable silicone composition according to claim 1 or 2, wherein the contents of Li, Na, and K in the UV-curable silicone composition are each 5 ppm or less.

11. The UV-curable silicone composition according to claim 1 or 2, which has a penetration of 40 or less as measured in accordance with ASTM D 1403 after being cured by UV irradiation at an illumination intensity of 100 mW/cm² for 45 seconds followed by 24 hours of standing at 23°C and 50% RH.

12. A potting material comprising the UV-curable silicone composition according to claim 1 or 2, the potting material having a viscosity of 50 mPa·s to 1,000 mPa·s at 23°C.

13. A sealant comprising a cured product of the UV-curable silicone composition according to claim 1 or 2.

14. The sealant according to claim 13, which is an electronic component encapsulant, an optical component encapsulant, or a bonding material.
